# EUROPEAN PATENT APPLICATION

(11) **EP 3 719 761 A1**
(43) Date of publication of application: **07.10.2020**
(21) Application number: 19888261.5
(22) Date of filing: 20.02.2019
(51) Int. Cl.: G07C 9/00, E05B 47/00

(54) **SMART LOCK POWER SUPPLY CONTROL METHOD, SMART LOCK SYSTEM AND STORAGE MEDIUM**

(71) Applicant: SHENZHEN GOODIX TECHNOLOGY CO., LTD., Shenzhen, Guangdong 518045 (CN)
(72) Inventor: The designation of the inventor has not yet been filed
(74) Representative: Elzaburu S.L.P.
(86) International application number: PCT/CN2019/075559
(87) International publication number: WO 2020/168481

(57) **Abstract**

Embodiments of the present application provides a power supply control method of an intelligent lock, an intelligent lock system, and a storage medium, where, the method includes: a controller acquires a wake-up request, where the wake-up request is used to indicate that the controller is in a working mode, supplies power to an operating device corresponding to the wake-up request when the controller is in the working mode, and stops supplying power to the operating device when determining that a processing corresponding to the acquired user operation has been accomplished by the operating device. According to this technical solution, an overall power consumption of the entire intelligent lock system including the controller and at least one operating device is low, which improves system stability and user experience.

## Description

### TECHNICAL FIELD

The present application relates to the technical field of intelligent door locks, and in particular, to a power supply control method of an intelligent lock, an intelligent lock system and a storage medium.

### BACKGROUND

With the rapid development and rapid popularization of intelligent lock technology, an intelligent door lock, especially an intelligent lock with multiple unlocking modes coexisting, has gradually come into the sight of mass consumers. The intelligent lock with multiple unlocking modes coexisting includes multiple peripheral modules connected to a main controller to achieve the multiple unlocking modes, which increase energy consumption of the entire intelligent lock.

In the prior art, in order to reduce the energy consumption of the entire intelligent lock, a usual method is to perform refinement design on each peripheral module to reduce power consumption of each peripheral module during normal work, thereby reducing the energy consumption of the entire intelligent lock.

However, the more functions the intelligent lock supports, the greater its overall energy consumption is, and the shorter the time it can work stably, resulting in poor stability of the intelligent lock and poor user experience.

### SUMMARY

The application provides a power supply control method of an intelligent lock, an intelligent lock system, and a storage medium, which are used to solve the technical problems of large power consumption, poor stability, and poor user experience in existing intelligent lock.

A first aspect of the present application provides a power supply control method of an intelligent lock, which is applied to an intelligent lock system, the intelligent lock system includes a controller and at least one operating device, the method includes:
acquiring, by the controller, a wake-up request, where the wake-up request is used to indicate that the controller is in a working mode;
supplying, by the controller, power to an operating device corresponding to the wake-up request when the controller is in the working mode; and
stopping, by the controller, supplying power to the operating device when determining that a processing corresponding to an acquired user operation request has been accomplished by the operating device in a power-on state.

In the present embodiment, the overall power consumption of the entire intelligent lock system including the controller and at least one operating device is low, which improves system stability and user experience.

Exemplarily, in a possible design of the first aspect, after the controller stops supplying power to the operating device, the method further includes:
entering, by the controller, a sleep mode from the working mode.

In the foregoing possible design of the first aspect, the method further includes:
entering, by the controller, the working mode from the sleep mode under a control of a self-possessed timing module when the controller is in the sleep mode;
detecting, by the controller, whether there is a pending task in the intelligent lock system; and
entering, by the controller, the sleep mode from the working mode when determining that there is no pending task.

Exemplarily, in another possible design of the first aspect, the at least one operating device includes: a fingerprint processing device;
the acquiring, by the controller, a wake-up request, includes:
acquiring, by the controller, the wake-up request sent by the fingerprint processing device through a sensing module;
correspondingly, before the controller acquires the wake-up request, the method further includes:
generating, by the fingerprint processing device, the wake-up request based on the user operation request detected by the sensing module; and
sending, by the fingerprint processing device, the wake-up request to the controller through the sensing module.

Exemplarily, in the foregoing possible design of the first aspect, after the controller supplies power to the operating device corresponding to the wake-up request, the method further includes:
performing, by the fingerprint processing device in the power-on state, the processing corresponding to the user operation request, to obtain a processing result;
sending, by the fingerprint processing device, the processing result to the controller; and
determining, by the controller when receiving the processing result, that the processing corresponding to the user operation request has been accomplished by the fingerprint processing device.

Exemplarily, in still another possible design of the first aspect, the at least one operating device includes: a narrowband internet of things NB-IOT device;
the acquiring, by the controller, a wake-up request, includes:
utilizing, by the controller, a latch to acquire the wake-up request sent by the NB-IOT device through a communication module, where the latch is connected with the communication module of the NB-IOT device;
correspondingly, before the controller acquires the wake-up request, the method further includes:
   generating, by the NB-IOT device, the wake-up request based on the user operation request acquired by the communication module; and
   sending, by the NB-IOT device, the wake-up request to the controller through the communication module.

Exemplarily, in the foregoing possible design of the first aspect, after the controller supplies power to the operating device corresponding to the wake-up request, the method further includes:
performing, by the NB-IOT device in a power-on state, the processing corresponding to the user operation request, to obtain a processing result;
sending, by the NB-IOT device, the processing result to the controller; and
determining, by the controller when receiving the processing result, that the processing corresponding to the user operation request has been accomplished by the NB-IOT device.

Exemplarily, in yet another possible design of the first aspect, the controller is integrated with a Bluetooth module; and the controller is in the working mode when the Bluetooth module is in a working state, and the controller is in a sleep mode when the Bluetooth module is in a non-working state.

Optionally, the controller is further integrated with a near field communication NFC module; and an NFC query operation is performed by the controller through the NFC module when the Bluetooth module is in the working state.

Exemplarily, in yet another possible design of the first aspect, the at least one operating device includes: an audio device and/or a driving device;
the method further includes:
judging, by the controller, whether there is a need to call the audio device and/or the driving device when the operation corresponding to the user operation request is being performed by the operating device;
supplying, by the controller, power to the audio device and/or the driving device when determining that there is the need to call the audio device and/or the driving device; and
stopping, by the controller, supplying power to the audio device and/or the driving device when determining that the corresponding operation has been accomplished by the audio device and/or the driving device.

A second aspect of the present application provides an intelligent lock system, including a controller and at least one operating device, where the controller includes: an acquiring module, a control module, a power supply module, and a determining module;
the acquiring module is configured to acquire a wake-up request, where the wake-up request is used to indicate that the controller is in a working mode;
the control module is configured to control the power supply module to supply power to an operating device corresponding to the wake-up request when the controller is in the working mode, and control the power supply module to stop supplying power to the operating device when the determining module determines that a processing corresponding to an acquired user operation request has been accomplished by the operating device in a power-on state.

Exemplarily, in a possible design of the second aspect, the control module is further configured to control, after stopping supplying power to the operating device, the controller to enter a sleep mode from the working mode.

In the foregoing possible design of the second aspect, the control module is further configured to control the controller to enter the working mode from the sleep mode under a control of a timing module that the controller has, when the controller is in the sleep mode;
the determining module is further configured to detect whether there is a pending task in the intelligent lock system; and
the control module is further configured to control the controller to enter the sleep mode from the working mode when the determining module determines that there is no pending task in the intelligent lock system.

Exemplarily, in another possible design of the second aspect, the at least one operating device includes: a fingerprint processing device; the fingerprint processing device includes: a sensing module, a fingerprint processing module, and a transceiver module;
the acquiring module is specifically configured to acquire the wake-up request sent by the fingerprint processing device through the sensing module;
correspondingly, the fingerprint processing module, is configured to generate the wake-up request based on the user operation request detected by the sensing module before the acquiring module acquires the wake-up request; and
the transceiver module is configured to send the wake-up request to the controller through the sensing module.

Exemplarily, in the foregoing possible design of the second aspect, the fingerprint processing module, is further configured to perform the processing corresponding to the user operation request when the fingerprint processing device is in the power-on state, to obtain a processing result;
the transceiver module is further configured to send the processing result obtained by the fingerprint processing module to the controller; and
the determining module is further configured to determine, when receiving the processing result sent by the transceiver module, that the processing corresponding to the user operation request has been accomplished by the fingerprint processing device.

Exemplarily, in still another possible design of the second aspect, the at least one operating device includes: a narrowband internet of things NB-IOT device; the NB-IOT device includes: a communication module and an NB processing module;
the acquiring module is specifically configured to utilize a latch to acquire the wake-up request sent by the NB-IOT device through the communication module, where the latch is connected with the communication module of the NB-IOT device;
the NB processing module is configured to generate the wake-up request based on the user operation request acquired by the communication module before the acquiring module acquires the wake-up request; and
the communication module is further configured to send the wake-up request to the controller.

Exemplarily, in the foregoing possible design of the second aspect, the NB processing module is further configured to perform the processing corresponding to the user operation request when the NB-IOT device is in a power-on state, to obtain a processing result;
the communication module is further configured to send the processing result obtained by the NB processing module to the controller; and
the determining module is further configured to determine, when receiving the processing result sent by the communication module, that the processing corresponding to the user operation request has been accomplished by the NB-IOT device.

Exemplarily, in yet another possible design of the second aspect, the controller is integrated with a Bluetooth module; and the controller is in the working mode when the Bluetooth module is in a working state, and the controller is in a sleep mode when the Bluetooth module is in a non-working state.

Optionally, the controller is further integrated with a near field communication NFC module; and
the control module is further configured to control the NFC module to perform an NFC query operation when the Bluetooth module is in the working state.

Exemplarily, in yet another possible design of the second aspect, the at least one operating device includes: an audio device and/or a driving device;
the controller further includes a judgment module;
the judgment module is configured to judge whether there is a need to call the audio device and/or the driving device when the operation corresponding to the user operation request is being performed by the operating device; and
the control module is configured to control the power supply module to supply power to the audio device and/or the driving device when the determining module determines that there is the need to call the audio device and/or the driving device, and control the power supply module to stop supplying power to the audio device and/or the driving device when the determining module determines that the corresponding operation has been accomplished by the audio device and/or the driving device.

A third aspect of the present application provides a storage medium, where the storage medium is stored with instructions, and when the instructions are run on a computer, the computer is caused to execute the method according to the foregoing first aspect and various embodiments of the first aspect.

In the power supply control method of the intelligent lock, the intelligent lock system and the storage medium provided in the embodiments of the present application, a wake-up request is acquired through a controller, and the wake-up request is used to indicate that the controller is in a working mode, and when the controller is in the working mode, it supplies power to an operating device corresponding to the wake-up request, and stops supplying power to the operating device when determining that a processing corresponding to the acquired user operation request has been accomplished by the operating device in a power-on state. According to this technical solution, the overall power consumption of the entire intelligent lock system including the controller and at least one operating device is low, which improves the system stability and the user experience.

### BRIEF DESCRIPTION OF DRAWINGS

FIG. 1 is a schematic diagram of an application scenario of a power supply control method of an intelligent lock according to an embodiment of the present application;
FIG. 2 is a schematic flowchart of a first embodiment of a power supply control method of an intelligent lock according to an embodiment of the present application;
FIG. 3 is a schematic flowchart of a second embodiment of a power supply control method of an intelligent lock according to an embodiment of the present application;
FIG. 4 is a schematic diagram of working principle of a controller interacting with a fingerprint processing device;
FIG. 5 is a schematic flowchart of a third embodiment of a power supply control method of an intelligent lock according to an embodiment of the present application;
FIG. 6 is a schematic diagram of working principle of an NB-IOT device triggering a controller to enter a working mode;
FIG. 7 is a schematic flowchart of a fourth embodiment of a power supply control method of an intelligent lock according to an embodiment of the present application;
FIG. 8 is a schematic flowchart of a fifth embodiment of a power supply control method of an intelligent lock according to an embodiment of the present application;
FIG. 9 is a schematic structural diagram of a first embodiment of an intelligent lock system according to an embodiment of the present application;
FIG. 10 is a schematic structural diagram of a second embodiment of an intelligent lock system according to an embodiment of the present application;
FIG. 11 is a schematic structural diagram of a third embodiment of an intelligent lock system according to an embodiment of the present application; and
FIG. 12 is a schematic structural diagram of a fourth embodiment of an intelligent lock system according to an embodiment of the present application.

### DESCRIPTION OF EMBODIMENTS

In order to make the objects, technical solutions, and advantages of the embodiments of the present application more clear, the technical solutions in the embodiments of the present application will be clearly and completely described in combination with the accompanying drawings in the embodiments of the present application. Obviously, the described embodiments are part of the embodiments of the present application, but not all the embodiments. Based on the embodiments of the present application, all other embodiments obtained by a person of ordinary skill in the art without creative efforts are within the protection scope of the present application.

Unless defined otherwise, all technical and scientific terms used herein have the same meaning as commonly understood by one skilled in the technical field that belongs to the present application. The term used herein in the specification of the present application is only for a purpose of describing specific embodiments, and is not intended to limit the present application. The term "and/or" used herein includes any and all combinations of one or more of relevant listed items. Some implementations of the present application will be described in detail below in combination with the drawings. Without conflict, the following embodiments and features in the embodiments can be combined with each other.

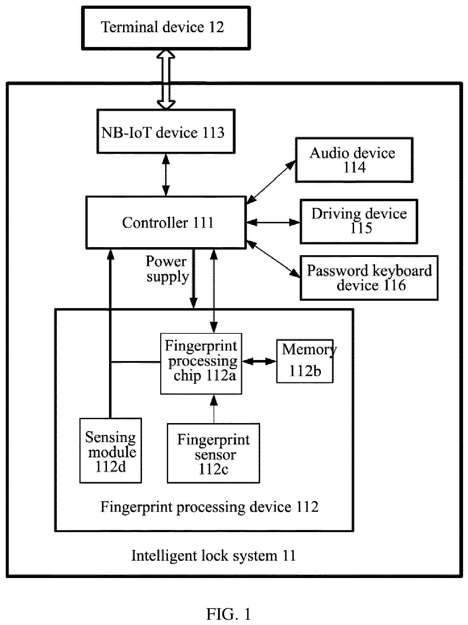

FIG. 1 is a schematic diagram of an application scenario of a power supply control method of an intelligent lock according to an embodiment of the present application. As shown in FIG. 1, the application scenario of the power supply control method of the intelligent lock may include: an intelligent lock system 11 and a terminal device 12. The intelligent lock system 11 may communicate with the terminal device 12 through various manners such as bluetooth, narrowband-internet of things (narrowband-internet of things, NB-IoT), and near field communication (near field communication, NFC).

Exemplarily, referring to FIG. 1, the intelligent lock system 11 may include: a controller 111 and at least one operating device. Where, the controller 111 is a main control component of the intelligent lock system, the intelligent lock system 11 mainly communicates with the terminal device 12 through the controller 111, and the controller 111 can perform interaction with the above at least one operating device to accomplish corresponding operations.

Exemplarily, the at least one operating device may include a fingerprint processing device 112 and a narrowband IoT NB-IoT device 113. The fingerprint processing device 112 includes a fingerprint processing chip 112a, a non-volatile (Flash) memory 112b, a fingerprint sensor 112c, and a sensing module 112d that can detect a user operation request. In the present embodiment, in general, the sensing module 112d is in a standby state and can acquire a user operation request at any time. For example, when a user has a fingerprint recognition request, and the user presses the fingerprint sensor 112c, the sensing module 112d is touched, therefore, the sensing module 112d can acquire the fingerprint recognition request.

Exemplarily, the sensing module 112d may generate a wake-up request based on the acquired user operation request and send it to the controller 111, so that the controller 111 enters a working mode under a trigger of the wake-up request.

Optionally, when the fingerprint processing device 112 is in a power-on state, the fingerprint sensor 112c may send acquired fingerprint information to the fingerprint processing chip 112a, so that the fingerprint processing chip 112a and the controller 111 can perform information interaction, to accomplish an operation corresponding to the user operation request.

Exemplarily, the NB-IoT device 113 may be a networked device with a WiFi function. The user may send a user operation request to the NB-IoT device 113 in the intelligent lock system 11 through the terminal device 12, and the NB-IoT device 113 performs information interaction with the controller 111 after receiving the user operation request, to accomplish an operation corresponding to the user operation request.

It is worth noting that, in the present embodiment, the above at least one operating device may further include other peripheral devices connected to the controller 111 such as an audio device 114, a driving device 115 and a password keyboard device 116, the embodiments of the present application do not limit the type and number of the operating device included in the intelligent lock system. When other functions are implemented, other operating devices may also be included, which is not limited here.

Exemplarily, the audio device 114 may be an audio device with various functions, or a buzzer or the like having a simple structure. The driving device 115 may be an engine or a motor or the like that drives unlocking. For the specific implementation of the above at least one operating device, the present embodiment does not limit thereto.

It can be understood that the terminal device 12 involved in the present application may be a device that provides voice and/or data connectivity to the user, and may also be a handheld device with a wireless connection function, or other processing devices connected to wireless modems. The terminal device 12 may communicate with at least one core network via a radio access network (radio access network, RAN). The terminal device 12 may be a mobile terminal, such as a mobile phone (also referred as a "cellular" phone) and a computer with a mobile terminal, for example, may be a portable, compact, handheld, computer-built-in or vehicle mobile device, which exchanges voice and/or data with the radio access network. The terminal device can also be referred as subscriber unit (subscriber unit, SU), subscriber station (subscriber station, SS), mobile station (mobile station, MS), mobile, remote station (remote station, RS), access point (access point, AP), remote terminal (remote terminal, RT), access terminal (access terminal, AT), user terminal (User Terminal), user agent (User Agent) or user equipment (User Equipment), which is not limited here.

The technical solution of the present application is described in detail below for the above application scenario.

With the rapid development of information technology, miniaturization IoT related products have also entered thousands of households. Intelligent home products have strict requirements on power consumption. For an intelligent door lock, usually two AA batteries need to ensure stable operation of the intelligent lock for 1 to 2 years. Therefore, how to design an intelligent lock system with low power consumption is very important for the competitive consumer electronics market.

At this stage, with the development of the intelligent door lock, an intelligent lock system with multiple unlocking modes becomes more and more popular. The multiple unlocking modes can include multiple modes, for example, password keyboard unlocking, fingerprint recognition unlocking, NB-IoT control unlocking, Bluetooth mode unlocking and near field communication NFC unlocking and the like, which will cause the energy consumption of the intelligent lock system with multiple unlocking modes to be large, greatly reducing the life of the intelligent lock and degrading the user experience. Therefore, in the intelligent lock system with multiple unlocking modes coexisting, how to reduce the standby power consumption of the entire intelligent lock system to as low as possible is a prerequisite to extend the life of the intelligent lock and a key indicator to reflect the performance of the entire intelligent lock system.

In view of the above problems, the embodiments of the present application provide a power supply control method of an intelligent lock and an intelligent lock system, where the power supply control method of the intelligent lock can be applied to the above intelligent lock system shown in FIG. 1. A controller acquires a wake-up request through a controller, where the wake-up request is used to indicate that the controller is in a working mode, and when the controller is in the working mode, the controller supplies power to the operating device corresponding to the wake-up request, and stops supplying power to the operating device when determining that a processing corresponding to the acquired user operation request has been accomplished by the operating device. According to this technical solution, under the condition that the intelligent lock system works normally, the power consumption of a processor and at least one operation module reaches the lowest, which effectively improves the stability of the intelligent lock system and improves the user experience.

The technical solution of the present application will be described in detail through specific embodiments below. It should be noted that the following specific embodiments may be combined with each other, and the same or similar concepts or processes may not be described in detail again in some embodiments.

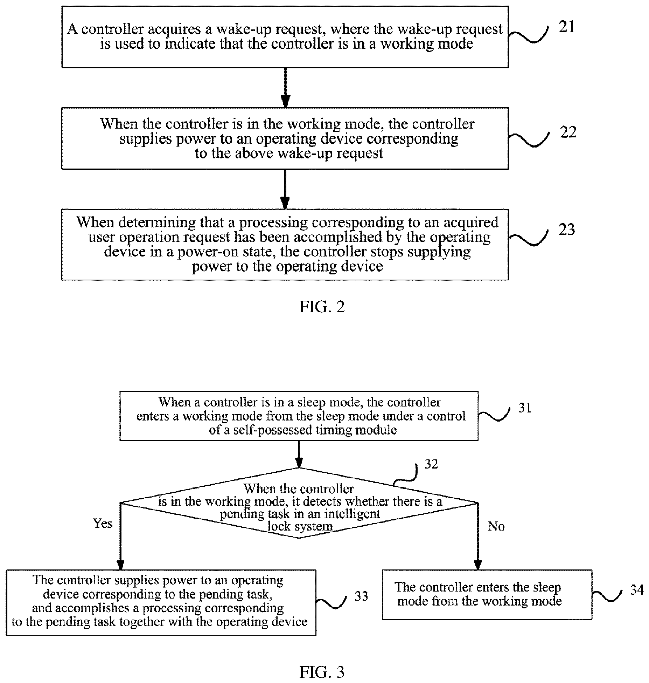

FIG. 2 is a schematic flowchart of a first embodiment of a power supply control method of an intelligent lock according to an embodiment of the present application. The power supply control method of the intelligent lock can be applied to the intelligent lock system described in FIG. 1. Referring to the above FIG. 1 shown, the intelligent lock system includes: a controller and at least one operating device.

Exemplarily, as shown in FIG. 2, the method may include the following steps:
Step 21: the controller acquires a wake-up request, where the wake-up request is used to indicate that the controller is in a working mode.

In the present embodiment, in general, the controller is a main control component of the intelligent lock system, and is connected to multiple operating devices of the intelligent lock system. In general, in order to save the energy consumption of the intelligent lock system, the controller can be in a sleep mode when it is in an idle state, and it enters into the working mode only when it is required to participate in performing a user operation request acquired by a peripheral operating device.

Exemplarily, in the present embodiment, when the controller is in the sleep mode, it can acquire the wake-up request sent by an operating device connected to the controller, where the wake-up request is used to indicate that the state of the controller is in the working mode, and determine the operating device sending the wake-up request, which further enables the controller to accomplish the processing corresponding to the user operation request acquired by the operating device together with the operating device.

Exemplarily, in the present embodiment, the working modes of the controller may include a sleep mode and a working mode. The sleep mode is a default working mode of the controller, and the sleep mode and the working mode can be switched with each other.

In general, the controller works in the sleep mode when it is in the idle state, and immediately enters the working mode once detecting information sent by the peripheral operating device, that is, the controller is in the working mode when it is busy, or the controller enters the working mode from the sleep mode periodically under a control of an internal timing module.

Optionally, in the present embodiment, the controller may acquire the wake-up request that is generated and sent by the sensing module of the fingerprint processing device when detecting a user operation request sent by the user pressing the fingerprint sensor or the like, and may also acquire the wake-up request that is generated and transmitted to the controller through a latch by the NB-IoT device when acquiring the user operation request, the embodiments of the present application do not limit the manner of acquiring the wake-up request, which may be determined according to actual situations.

Step 22: when the controller is in the working mode, the controller supplies power to the operating device corresponding to the wake-up request.

In the present embodiment, all operating devices connected to the controller can be supplied power by the controller. In general, in order to further reduce the power consumption of the entire intelligent lock system, the above at least one operating devices may all be in the power-off state (a power-down state). If a certain operating device acquires a user operation request, then the controller supplies power to it.

Exemplarily, in the present embodiment, the controller may enter the working mode from the sleep mode under a trigger of the above wake-up request, and then determine the operating device corresponding to the wake-up request according to a source of the wake-up request, and the controller supplies power to it to ensure that the operating device can work normally.

Step 23: the controller stops supplying power to the operating device when determining that the processing corresponding to the acquired user operation request has been accomplished by the operating device.

In the present embodiment, the controller in the working mode can continuously supply power to the operating device corresponding to the wake-up request until determining that the operating device has accomplished an operation corresponding to the user operation request, where the operating device can perform the acquired user operation request under the power-on state.

For example, the fingerprint processing device can accomplish operations such as fingerprint recognition, fingerprint registration, fingerprint query, and fingerprint priority setting corresponding to various user operation requests.

Optionally, the NB-IoT device can also receive various user operation requests such as deletion, query, registration trigger, and fingerprint priority setting sent by the user through the terminal device, and then the controller may also supply power to the fingerprint processing device when the fingerprint processing device is required to work together, to enable the fingerprint processing device to accomplish the processing corresponding to the user operation request together with the controller and the NB-IoT device.

In the present embodiment, the controller may also detect whether the operating device has accomplished the processing corresponding to the user operation request. For example, the controller detects whether a processing result fed back by the operating device has been received and, if the processing result fed back by the operating device has been received, determines that the operating device has accomplished the processing corresponding to the user operation request.

Further, in order to reduce the power consumption of the entire intelligent lock system, when the operating device has accomplished the processing corresponding to the user operation request, the controller may stop supplying power to the operating device.

In the present embodiment, the controller, as a control core of the intelligent lock system, can not only perform information interaction with peripheral operating devices, but also provide interface service, data query, status query, and notification service for the terminal devices through the NB-IoT device, therefore, it can improve the compatibility of the intelligent lock system to a certain extent.

Exemplarily, the controller of the intelligent lock system is in a low power consumption state such as the sleep mode when it is in the idle state, it automatically enters the working mode and supplies power to the operating device corresponding to the wake-up request when a peripheral operating device triggers an interrupt through the wake-up request, and stops supplying power to the operating device after the operating device has accomplished the operation corresponding to the user operation request acquired by the operating device, which greatly reduces the overall power consumption of the intelligent lock system and improves the system stability.

The power supply control method of the intelligent lock provided by the embodiment of the present application, is applied to an intelligent lock system including a controller and at least one operating device. Specifically, the controller acquires a wake-up request, where the wake-up request is used to indicate that the controller is in a working mode, supplies power to an operating device corresponding to the wake-up request when the controller is in the working mode, and stops supplying power to the operating device when determining that the processing corresponding to the acquired user operation request has been accomplished by the operating device. In this technical solution, the overall power consumption of the entire intelligent lock system including the controller and at least one operating device is low, which improves the system stability and the user experience.

Exemplarily, in a possible implementation of the present application, after the controller stops supplying power to the operating device, the following step may be further performed:
the controller enters the sleep mode from the working mode.

In the present embodiment, when the controller determines that the operating device has accomplished the operation corresponding to the user operation request and stops supplying power to the operating device, the controller itself enters the sleep mode again, which also reduces the power consumption of the controller and further reduces the overall power consumption of the intelligent lock system, thereby improving the system stability.

Exemplarily, based on the above embodiments, FIG. 3 is a schematic flowchart of a second embodiment of a power supply control method of an intelligent lock according to an embodiment of the present application. As shown in FIG. 3, the method may further include the following steps:
Step 31: when the controller is in the sleep mode, the controller enters the working mode from the sleep mode under a control of a self-possessed timing module.

Optionally, in the present embodiment, when the controller is in an idle state for a long time, in order to avoid that some pending tasks in the intelligent lock system cannot be found in time, the controller may enter the working mode from the sleep mode when the controller is in the sleep mode, to detect whether there is a pending task pending to be performed in the intelligent lock system.

Exemplarily, the controller has timing modules such as a real-time clock (real-time clock, RTC), and thus can be automatically woken up under a timing control of the internal RTC when no wake-up request is acquired by the controller from the outside, and enters the working mode from the sleep mode.

Step 32: when the controller is in the working mode, the controller detects whether there is a pending task in the intelligent lock system; if yes, Step 33 is performed, and if no, Step 34 is performed.

Optionally, in the present embodiment, when the controller is woken up to enter the working mode, the controller can detect a state of each operating device connected thereto, and determine whether there is a pending task in the intelligent lock system. If there is a pending task, then move to Step 33 to perform a corresponding processing. If there is no pending task, then perform Step 34 to continue to enter the sleep mode.

Step 33: the controller supplies power to the operating device corresponding to the pending task, and accomplishes the processing corresponding to the pending task together with the operating device.

In the present embodiment, when the controller determines that there is a pending task in the intelligent lock system, it first determines an operating device corresponding to the pending task and supplies power to the operating device, to enable the operating device in the power-on state to accomplish an operation corresponding to the pending task together with the controller.

The specific implementation principle of this step is similar to the record in the foregoing Step 23, and details are not described herein again.

Step 34: the controller enters the sleep mode from the working mode.

In the present embodiment, when the controller determines that there is no pending task at the current moment, it enters the sleep mode from the working mode. At the same time, the controller may not supply power to the operating device connected thereto, to ensure that the power consumption of the entire intelligent lock system is lowest.

Exemplarily, the controller can control a low dropout regulator (low dropout regulator, LDO) through an input-output (IO) interface to indirectly control the power-on and power-off of peripheral operating devices, and the operating devices that do not require standby can be directly powered off, to ensure that the power consumption of the entire intelligent lock system is in a minimum state.

It can be understood that, the LDO is a linear regulator that uses a transistor or field effect transistor (FET) operating in its linear region to subtract an excess voltage from an input voltage of the controller, to generate a regulated output voltage. Finally, the regulated output voltage is supplied to the corresponding operating device, to achieve accurate power supply of the operating device and thus improve the stability of the intelligent lock system.

In the power supply control method of the intelligent lock provided by the embodiment of the present application, when the controller is in the sleep mode, the controller enters the working mode from the sleep mode under the control of the self-possessed timing module, and when the controller is in the working mode, it detects whether there is a pending task in the intelligent lock system, and enters the sleep mode from the working mode when determining that there is no pending task. According to this technical solution, the controller can enter the working mode under the control of the timing module to perform detection, which can ensure that the pending task can be processed in time, thereby increasing the stability of the intelligent lock system and improving the user experience.

Exemplarily, in a possible design of the present application, the above at least one operating device includes: a fingerprint processing device. Exemplarily, a schematic diagram of an interaction of the controller controlling the fingerprint processing device is firstly introduced below.

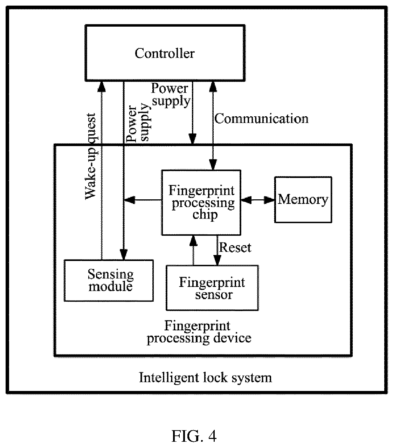

For example, FIG. 4 is a schematic diagram of working principle of a controller interacting with a fingerprint processing device. As shown in FIG. 4, in the present embodiment, the controller can not only supply power to a fingerprint processing chip and a sensing module of the fingerprint processing device, but also receive a wake-up request sent by the sensing module. In the present embodiment, the wake-up request is actually an interrupt signal, and can be communicated with the fingerprint processing chip.

In the present embodiment, the sensing module is a module with low power consumption, for example, a ring key, which can sense a pressing operation of the user, and generate a wake-up request and send it to the fingerprint processing chip, to trigger the controller to enter the working mode.

Optionally, as shown in FIG. 4, the fingerprint processing chip can also control a power switch of the controller for the sensing module through the input-output interface, that is, when the fingerprint processing chip is in a power-on state, the controller can control the state of the power switch for the sensing module to be an off state, at this time, the controller supplies power to the fingerprint processing chip, but does not supply power to the sensing module. When the fingerprint processing chip is in a power-off state, the controller can control the power switch for the sensing module to be an on state, at this time, the controller does not supply power to the fingerprint processing chip, but supplies power to the sensing module.

Exemplarily, the controller can control whether the LDO supplies power to the fingerprint processing chip and the sensing module through a general purpose input/output (general purpose input output, GPIO).

Optionally, as shown in FIG. 4, in order to improve communication security of the controller and the fingerprint processing chip, communication between the controller and the fingerprint processing chip may be performed based on a preset protocol.

Exemplarily, the preset protocol may be a universal asynchronous receiver/transmitter (universal asynchronous receiver/transmitter, UART) protocol. In this way, before sending an instruction to the fingerprint processing chip, the controller can firstly perform encryption processing on the instruction to be sent based on the format of the UART protocol, and then send the encrypted instruction to the fingerprint processing chip.

It is worth noting that, in practical applications, the preset protocol may also be other protocols, which may be determined according to an agreed encryption manner of the controller and the fingerprint processing chip, and details are not described herein again.

Exemplarily, in the present embodiment, communication between the fingerprint processing chip and a memory can be performed based on a queued serial peripheral interface (queued serial peripheral interface, SPI) protocol, which is a communication bus more widely used than SPI, with features of high-speed, full-duplex and synchronous, and the transmission efficiency is high.

Optionally, the communication between the fingerprint processing chip and the fingerprint sensor may be performed based on the SPI protocol, which is simple and easy to implement and has high universality.

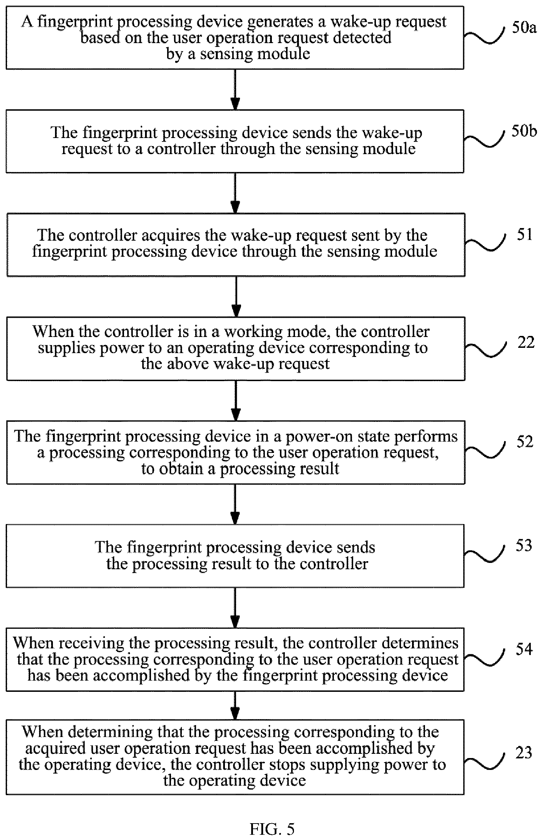

The power supply control method of the intelligent lock will be described below by way of example in combination with the fingerprint processing device shown in FIG. 4. Exemplarily, FIG. 5 is a schematic flowchart of a third embodiment of a power supply control method of an intelligent lock according to an embodiment of the present application. As shown in FIG. 5, in the present embodiment, the foregoing Step 21 may be implemented by the following step:
Step 51: the controller acquires a wake-up request sent by the fingerprint processing device through the sensing module.

Exemplarily, in the present embodiment, according to the record in FIG. 4, in general, only the sensing module in the fingerprint processing device is in a power-on state, which can detect in real time whether there is a user operation request initiated by the user by pressing the fingerprint sensor. When a user operation request is detected, a wake-up request is generated based on the user operation request and sent to the controller, to interrupt the sleep mode of the controller. That is, in the present embodiment, the acquiring the wake-up request by the controller is actually receiving the wake-up request sent by the fingerprint processing device through the sensing module.

Correspondingly, referring to FIG. 5, before the foregoing Step 21, the method may further include the following steps:
Step 50a: the fingerprint processing device generates a wake-up request based on the user operation request detected by the sensing module.

In general, the sensing module does not actively send a wake-up request to the controller, but needs a trigger from the external environment. Optionally, when a core component of the fingerprint processing device, that is, the fingerprint processing chip, is in the power-off state, the sensing module can detect whether there is a user operation request. When a user operation request is detected, for example, a fingerprint recognition request corresponding to the user pressing the fingerprint sensor, the sensing module can generate a signal, that is, a wake-up request.

Optionally, the sensing module can be connected to a wake-up pin (a GPIO pin with a wake-up function) of the controller. When the wake-up pin of the controller is limited, more modules can be controlled by multiplexing the wake-up pin.

Step 50b: the fingerprint processing device sends the wake-up request to the controller through the sensing module.

In the present embodiment, when generating the wake-up request, the sensing module can send it to the controller, so that the controller enters the working mode from the sleep mode, and then supplies power to the fingerprint processing chip.

Optionally, in the present embodiment, referring to FIG. 5 shown, after the foregoing Step 22, the method may further include the following steps:
Step 52: the fingerprint processing device in a power-on state performs a processing corresponding to the user operation request, to obtain a processing result.

In the present embodiment, after entering the working mode, the controller firstly determines that an operating device corresponding to the wake-up request is the fingerprint processing device, and then supplies power to the fingerprint processing device, so that the fingerprint processing device in the power-on state performs the processing corresponding to the above-mentioned acquired user operation request to obtain the processing result.

It is worth noting that, in the present embodiment, the fingerprint processing chip is a chip with fingerprint processing capability, for example, a match on chip (mach on chip, MOC), which can independently complete functions such as fingerprint collection, processing and recognition, and storing user fingerprint template information.

Exemplarily, in the present embodiment, if the user operation request acquired by the fingerprint processing device is a registration request, then the fingerprint processing device performs a registration operation. Specifically, during a process of the registration operation, the fingerprint processing device may send fingerprint information collected through the fingerprint sensor each time and a result of collect succeeded/collect failed, and a failure reason to the processing device, until preset N valid fingerprint information is collected, where N is a positive integer. The fingerprint information and the result of collect succeeded/collect failed and the failure reason obtained by the fingerprint processing device during the registration operation process of collecting N valid fingerprint information are collectively referred as registration result.

Optionally, if the user operation request acquired by the fingerprint processing device is a recognition request or a deletion request or a query request or a fingerprint priority setting request, then the fingerprint processing device performs the above recognition request or deletion request or query request or fingerprint priority setting request, to obtain a recognition result, a deletion result or a fingerprint priority setting result, such as a recognition result including recognize succeeded/recognize failed and failure reason, a deletion result including delete succeeded/delete failed and failure reason, or a fingerprint priority setting result including fingerprint priority set succeeded/ fingerprint priority set failed and failure reason.

In the present embodiment, the registration result or recognition result or deletion result or fingerprint priority setting result obtained by the fingerprint processing device through performing the corresponding operation is collectively referred as processing result.

Optionally, in the present embodiment, if the fingerprint processing chip communicates with the controller through the UART protocol, the processing result may be a registration result or recognition result or deletion result or fingerprint priority setting result after encryption processing based on the format of the UART protocol.

Step 53: the fingerprint processing device sends the processing result to the controller.

Step 54: when receiving the processing result, the controller determines that the processing corresponding to the user operation request has been accomplished by the fingerprint processing device.

Exemplarily, the fingerprint processing device sends the obtained processing result to the controller, and the controller can determine whether a current task of the fingerprint processing device has been accomplished according to the received processing result, and then determine whether to continue to supply power to the fingerprint processing device.

Exemplarily, the controller performs analysis on the received processing result, and stops supplying power to the fingerprint processing device when determining that the fingerprint processing device has accomplished the processing corresponding to the user operation request, and enters the sleep mode from the working mode when determining that there are no other pending tasks.

In the present embodiment, the power on/off of the fingerprint processing chip and the sensing module of the fingerprint processing device is controlled by the controller through the LDO, with respect to the fingerprint processing device, when the intelligent lock system is in the sleep mode, the fingerprint processing chip of which is in a completely power-down state, and only the sensing module is in the power-on state. Therefore, the power consumption is extremely low, the pressure of the controller is reduced, and the response speed of the controller is improved, thereby improving the user experience.

Exemplarily, in another possible design of the present application, the above at least one operating device includes: an NB-IOT device. Exemplarily, a schematic diagram of working principle of the NB-IOT device triggering the controller to enter the working mode is first introduced below.

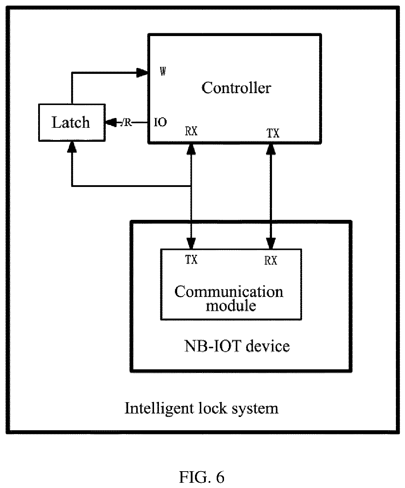

For example, FIG. 6 is a schematic diagram of working principle of an NB-IOT device triggering a controller to enter a working mode. As shown in FIG. 6, in the present embodiment, the NB-IOT device includes a communication module, where the communication module communicates with a transceiver interface of the controller through a transceiver interface.

Optionally, in the present embodiment, in order to save the overall power consumption of the intelligent lock system, in general, the controller and the NB-IOT device are both in the sleep mode. When the user operation request sent by the user through the terminal device such as a terminal device is acquired, the NB-IOT device is woken up for sending a data signal to the controller.

Since the controller in the sleep mode cannot receive data normally when the NB-IOT device is woken up, at this time, in order to make the controller be woken up in time, as shown in FIG. 6, a receiving interface RX of the controller and a sending interface TX of the NB-IOT device are both further connected to a latch. The latch can acquire the data signal sent by the NB-IOT device through the sending interface TX, which is transmitted to a wake-up pin W of the controller, thereby waking up the controller to enter the working mode.

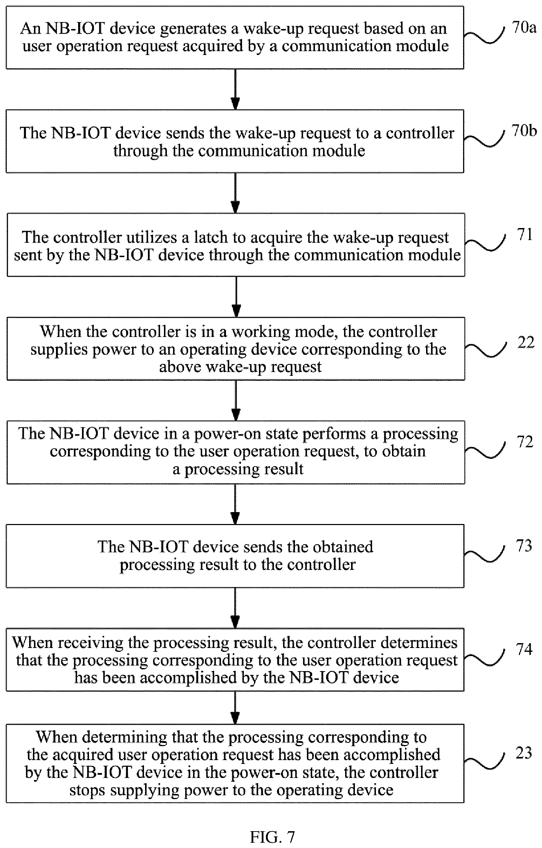

In the following, the power supply control method of the intelligent lock will be described by way of example in combination with the schematic diagram shown in FIG. 6. Exemplarily, FIG. 7 is a schematic flowchart of a fourth embodiment of a power supply control method of an intelligent lock according to an embodiment of the present application. As shown in FIG. 7, in the present embodiment, the foregoing Step 21 may be implemented by the following step:
Step 71: the controller utilizes the latch to acquire a wake-up request sent by the NB-IOT device through the communication module.

The latch is connected to the communication module of the NB-IOT device.

In the present embodiment, referring to the record in FIG. 6, the latch is connected to the communication module of the NB-IOT device and the wake-up pin W of the controller. The data signal, sent by the NB-IOT device to the controller through the sending interface when it is just woken up, cannot be received normally by the controller because the controller is still in the sleep mode, but the data signal can be acquired by the latch and transmitted to the wake-up pin W of the controller, therefore, the controller can utilize the latch to acquire the wake-up request sent by the NB-IOT device through the communication module.

Exemplarily, before entering the sleep mode, the controller may firstly set the latch through an IO port. An NB chip of the NB-IOT device may send a data signal through the sending interface. The latch immediately latches the state when detecting that a level value of the data signal of a sending pin is changed, and meanwhile outputs interrupt information that is, the wake-up request.

Correspondingly, referring to FIG. 7, before the foregoing Step 21, the method may further include the following steps:
Step 70a: the NB-IOT device generates a wake-up request based on the user operation request acquired by the communication module.

In the present embodiment, in general, the communication module of the NB-IOT device does not actively send the wake-up request to the controller unless an external condition triggers it. Optionally, when the NB-IOT device is in a power-off state, if the communication module receives the user operation request, for example, the user operation request such as a query request or a registration request triggered by the user through the terminal device, the communication module will generate a signal, that is, the wake-up request.

Step 70b: the NB-IOT device sends the wake-up request to the controller through the communication module.

In the present embodiment, when the wake-up request is generated, the communication module may send it to the controller, so that the controller enters the working mode from the sleep mode. Exemplarily, when the controller is woken up, a wake-up source can be queried, and then a data processing logic of the corresponding device is preferentially started.

Optionally, in the present embodiment, referring to FIG. 7, after the foregoing Step 22, the method may further include the following steps:
Step 72: the NB-IOT device performs a processing corresponding to the user operation request when it is in a power-on state, to obtain a processing result.

In the present embodiment, after entering the working mode, the controller firstly determines that an operating device corresponding to the wake-up request is the NB-IOT device, and then supplies power to the NB-IOT device, so that the NB-IOT device in the power-on state performs the processing corresponding to the above-mentioned acquired user operation request to obtain the processing result.

Optionally, in the present embodiment, if the NB-IOT device communicates with the controller through the UART protocol, the processing result may be a result after encryption processing based on the format of the UART protocol.

Step 73: the NB-IOT device sends the obtained processing result to the controller.

Step 74: after receiving the processing result, the controller determines that the processing corresponding to the user operation request has been accomplished by the NB-IOT device.

Exemplarily, the NB-IOT device sends the obtained processing result to the controller, and the controller may determine whether a current operation of the NB-IOT device has been accomplished according to the received processing result, and then determine whether to continue to supply power to the NB-IOT device.

Exemplarily, the controller performs analysis on the received processing result, stops supplying powering to the NB-IOT device when determining that the NB-IOT device has accomplished the processing corresponding to the above-mentioned user operation request, and enters the sleep mode from the working mode when determining that there are no other pending tasks.

In the power supply control method of the intelligent lock provided by the present embodiment, if at least one operating device includes an NB-IOT device, the controller utilizes a latch to acquire a wake-up request sent by the NB-IOT device through a communication module, and then after the controller supplies power to an operating device corresponding to the wake-up request, the NB-IOT device in a power-on state performs a processing corresponding to a user operation request to obtain a processing result and sends the processing result to the controller, and the controller determines that the NB-IOT device has accomplished the processing corresponding to the user operation request after receiving the processing result. This technical solution, while ensuring the functions of the entire intelligent lock system, and can keep the entire intelligent lock system in a low power consumption state, which reduces the power consumption of the intelligent lock system, and thus leads to a good user experience.

It is worth noting that in any of the above embodiments, when the wake-up pin of the controller is limited, the present embodiment can control more modules by means of multiplexing the wake-up pin. For example, wake-up request signals of multiple modules can be latched through a latch, and then connected to an independent GPIO pin of the controller and a pin shared with other peripherals, to wake-up the controller.

Exemplarily, in a possible design of the embodiment of the present application, the controller is integrated with a Bluetooth module; and the controller is in the working mode when the Bluetooth module is in a working state, and the controller is in the sleep mode when the Bluetooth module is in a non-working state.

Optionally, in the present embodiment, a chip corresponding to the controller may be a chip integrated with a Bluetooth module. In order to make the intelligent lock system in a low power consumption state, when the Bluetooth module is in a working state, that is, the Bluetooth module needs to broadcast information, the controller may be in the working mode, and detect whether there is a pending task outside under the working mode. Correspondingly, when the Bluetooth module is in a non-working state, that is, during a period that the Bluetooth module is not broadcasting information, the controller is in the sleep mode to reduce the power consumption of the controller, that is, reduce the power consumption of the entire intelligent lock system.

For example, the intelligent lock system supports a Bluetooth unlocking manner, and a Bluetooth function of a terminal device can be successfully matched with a Bluetooth function of the intelligent lock system, so that the user can control opening of a corresponding door lock of the intelligent lock system through the Bluetooth function of the terminal device.

Exemplarily, in the foregoing possible design of the embodiment of the present application, the controller is further integrated with a near field communication NFC module; the controller performs an NFC query operation through the NFC module when the Bluetooth module is in the working state.

Optionally, when the intelligent lock system supports a NFC function, the controller can perform an NFC query operation when the Bluetooth module is in the working state, which may ensure the power consumption of the entire intelligent lock system to be lowest.

For example, an NFC unlocking manner of the intelligent lock system, when the user brings a device storing an access code close to the intelligent lock system, the intelligent lock system can perform recognition on the access code and then determine whether to perform an unlocking operation.

Specifically, since a transmission distance of NFC is extremely short and a speed of establishing a connection is fast, when the intelligent lock system is integrated with the NFC function, and an access card of the user or a terminal device storing the access code contacts peripherals of the intelligent lock system, the access card and the intelligent lock system can then establish a connection, to achieve an access control.

Exemplarily, in another possible design of the present embodiment, the controller may perform an NFC query operation when the NB-IOT device is in a working state, which may also ensure the power consumption of the entire intelligent lock system to be lowest.

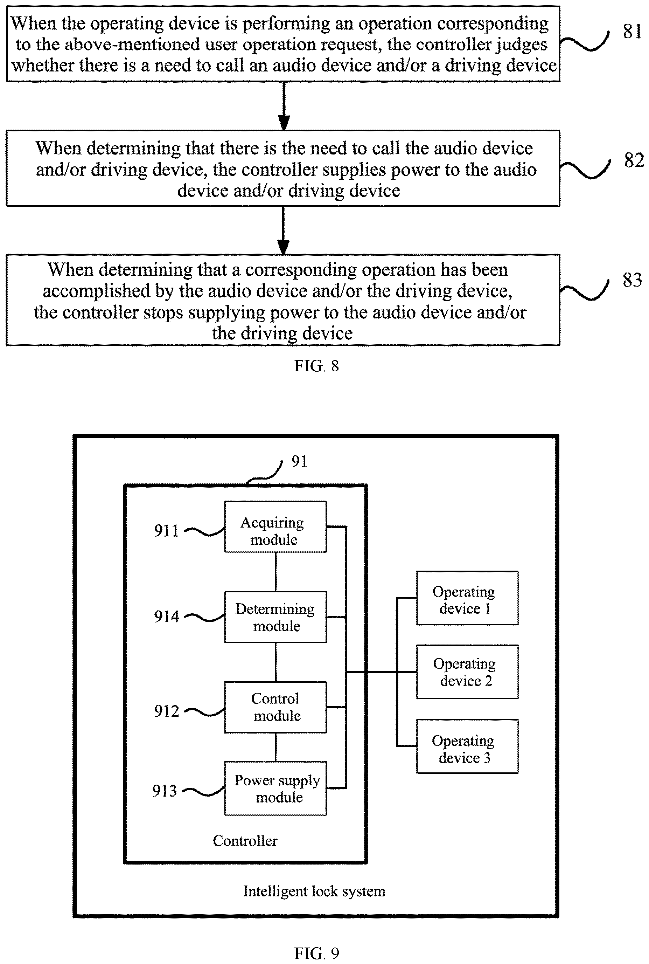

Exemplarily, in yet another possible design of the present application, FIG. 8 is a schematic flowchart of a fifth Embodiment of a power supply control method of an intelligent lock according to an embodiment of the present application. In the present embodiment, the above at least one operating device includes: an audio device and/or a driving device. Optionally, as shown in FIG. 8, the power supply control method of the intelligent lock provided by the present embodiment may further include the following steps:

Step 81: when the operating device is performing an operation corresponding to the above-mentioned user operation request, the controller judges whether there is a need to call the audio device and/or the driving device.

Optionally, in the present embodiment, when the fingerprint processing device or the NB-IOT device or other devices performs the operation corresponding to the acquired user operation request, whether there is a need to call the audio device to push the processing result or call the driving device to perform tasks such as unlocking, during the processing process or after the processing is finished, is detected.

For example, when the fingerprint processing device is performing the recognition request, whether there is a need to call the driving device to perform unlocking task, or whether there is a need to call the audio device to perform voice play task, is judged; when the fingerprint processing device is performing the query request, whether there is a need to call the audio device to perform voice play task of the query result or the like is judged; for another example, when the NB-IOT device is performing the query request sent by the user through the terminal device, whether there is a need to call the audio device to play the query result or the like is judged.

With respect to the specific manner that the operating device performs the operation corresponding to the user operation request, the present embodiment does not limit thereto, which may be determined according to actual situations.

Step 82: when determining that there is a need to call the audio device and/or driving device, the controller supplies power to the audio device and/or driving device.

Exemplarily, when the controller determines that there is a need to call the audio device and/or the driving device, the controller supplies power to the corresponding device. For example, when the fingerprint processing device needs to call the driving device to unlocking, then the driving device is supplied power, and when the fingerprint processing device needs to call the audio device to play the fingerprint recognition result and/or the query result, then the audio device is supplied power, or the like; or, when the fingerprint processing device needs to simultaneously call the driving device to unlock and needs to call the audio device to play the fingerprint recognition result and/or the query result, then the driving device and the audio device are supplied power at the same time.

Step 83: when determining that a corresponding operation has been accomplished by the audio device and/or the driving device, the controller stops supplying power to the audio device and/or the driving device.

Exemplarily, after the corresponding operation has been accomplished by the audio device and/or the driving device, the controller stops supplying power to the audio device and/or the driving device in time, which can reduce the power consumption of the intelligent lock system and improve the system stability.

Exemplarily, after the driving device performs an unlocking process, the controller stops supplying power to the driving device, to cause it to perform the power-off state; after the audio device performs a voice play process, the controller stops supplying power to the audio device, to cause it to perform the power-off state.

The audio device and the driving device in the present embodiment are powered on only when the intelligent lock system needs to call them, and then powered off after the operation has been accomplished, which realizes the low power consumption function of the intelligent lock system.

Optionally, in the present embodiment, when the intelligent lock system supports a password keyboard function, the keyboard may be a keyboard with a sensing module (for example, a ring key). When a pressing operation is detected, an interrupt is triggered to wake up the controller, thereby achieving the low power consumption function.

In the power supply control method of the intelligent lock provided by the embodiment of the present application, when the operating device is performing the operation corresponding to the user operation request, the controller judges whether to call the audio device and/or the driving device, and when determining to call the audio device and/or the driving device, the controller supplies power to the audio device and/or the driving device, and when determining that the corresponding operation has been accomplished by the audio device and/or the driving device, the controller stops supplying power to the audio device and/or the driving device, thereby realizing the low power consumption function, extending the life of the intelligent lock system, and improving the product competitiveness.

The following is a system embodiment of the present application, which can be used to implement the method embodiment of the present application. For details not disclosed in the system embodiment of the present application, please refer to the method embodiment of the present application.

FIG. 9 is a schematic structural diagram of a first embodiment of an intelligent lock system according to an embodiment of the present application. As shown in FIG. 9, the system may include a controller 91 and at least one operating device (for example, operating device 1 to operating device 3). The controller 91 includes: an acquiring module 911, a control module 912, a power supply module 913, and a determining module 914.

The acquiring module 911 is configured to acquire a wake-up request, where the wake-up request is used to indicate that the controller 91 is in a working mode.

The control module 912 is configured to control the power supply module 913 to supply power to an operating device corresponding to the wake-up request when the controller 91 is in the working mode, and control the power supply module 913 to stop supplying power to the operating device when the determining module 914 determines that a processing corresponding to the acquired user operation request has been accomplished by the operating device.

Exemplarily, in a possible design of the present embodiment, the control module 912 is further configured to control, after stopping supplying power to the operating device, the controller to enter a sleep mode from the working mode.

Optionally, the above control module 912 is further configured to control the controller to enter the working mode from the sleep mode under a control of a timing module that the controller has, when the controller 91 is in the sleep mode;

the determining module 914 is further configured to detect whether there is a pending task in the intelligent lock system when the controller 91 is in the working mode; and

the control module 912 is further configured to control the controller 91 to enter the sleep mode from the working mode when the determining module 914 determines that there is no pending task in the intelligent lock system.

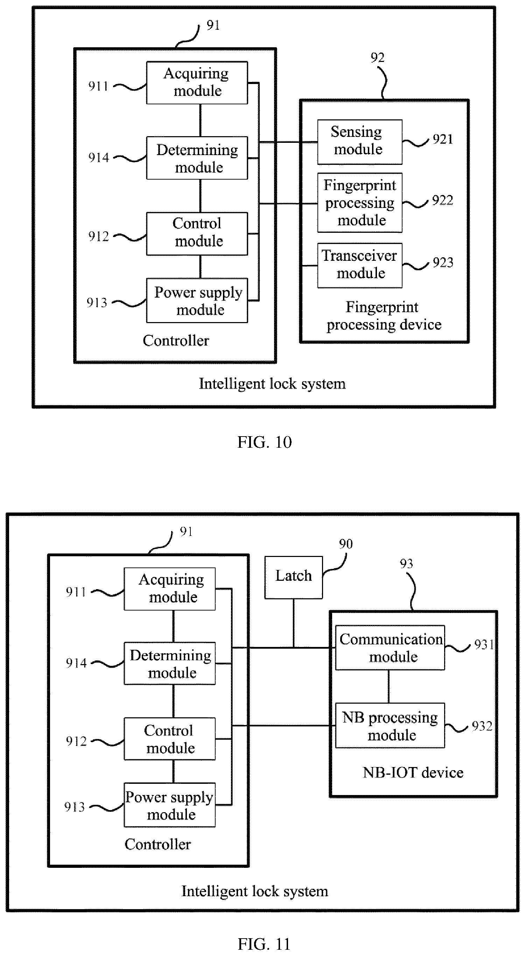

Exemplarily, in another possible design of the present embodiment, FIG. 10 is a schematic structural diagram of a second embodiment of an intelligent lock system according to the embodiment of the present application. As shown in FIG. 10, in the present system embodiment, the at least one operating device includes: a fingerprint processing device 92. The fingerprint processing device 92 includes: a sensing module 921, a fingerprint processing module 922, and a transceiver module 923.

The above acquiring module 911 is specifically configured to acquire the wake-up request sent by the fingerprint processing device 92 through the sensing module 921;
correspondingly, the fingerprint processing module 922 is configured to generate the wake-up request based on the user operation request detected by the sensing module 921 before the acquiring module 911 acquires the wake-up request; and
the transceiver module 923 is configured to send the wake-up request to the controller 91 through the sensing module 921.

Optionally, in the present embodiment, the fingerprint processing module 922, is further configured to perform the processing corresponding to the user operation request when the fingerprint processing device is in the power-on state, to obtain a processing result;
the transceiver module 923 is further configured to send the processing result obtained by the fingerprint processing module 922 to the controller 91; and
the determining module 914 is further configured to determine, when receiving the processing result sent by the transceiver module 923, that the processing corresponding to the user operation request has been accomplished by the fingerprint processing device 92.

Exemplarily, in yet another possible design of the present embodiment, FIG. 11 is a schematic structural diagram of a third embodiment of an intelligent lock system according to the present embodiment of the present application. As shown in FIG. 11, in the present system embodiment, the at least one operating device includes: a narrowband internet of things NB-IOT device 93; the NB-IOT device 93 includes: a communication module 931 and an NB processing module 932.

The acquiring module 911 is specifically configured to utilize a latch 90 to acquire the wake-up request sent by the NB-IOT device 93 through the communication module 931, where the latch 90 is connected with the communication module 931 of the NB-IOT device 93;
the NB processing module 932 is configured to generate the wake-up request based on the user operation request acquired by the communication module 931 before the acquiring module 911 acquires the wake-up request; and
the communication module 931 is further configured to send the wake-up request to the controller 91.

Optionally, in the present embodiment, the NB processing module 932 is further configured to perform the processing corresponding to the user operation request when the NB-IOT device is in a power-on state, to obtain a processing result;
the communication module 931 is further configured to send the processing result obtained by the NB processing module 932 to the controller 91; and
the determining module 914 is further configured to determine, when receiving the processing result sent by the communication module 931, that the processing corresponding to the user operation request has been accomplished by the NB-IOT device 93.

Exemplarily, in yet another possible design of the present embodiment, the controller 91 is integrated with a Bluetooth module; and the controller 91 is in the working mode when the Bluetooth module is in a working state, and the controller 91 is in the sleep mode when the Bluetooth module is in a non-working state.

Optionally, the controller 91 is further integrated with a near field communication NFC module; and the control module 912 is further configured to control the NFC module to perform an NFC query operation when the Bluetooth module is in the working state.

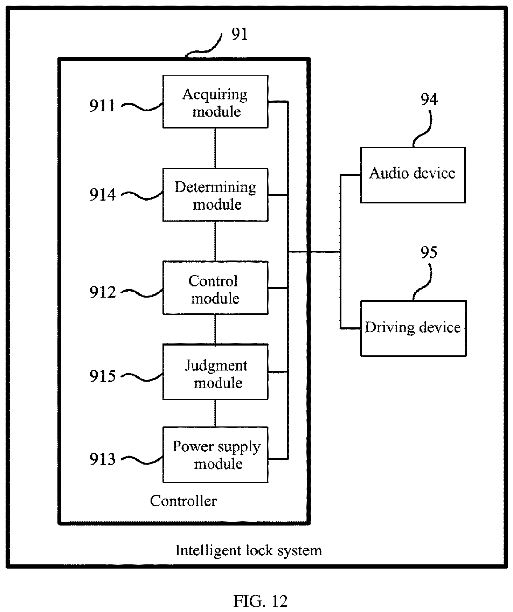

Exemplarily, in another possible design of the present embodiment, FIG. 12 is a schematic structural diagram of a fourth embodiment of an intelligent lock system according to an embodiment of the present application. As shown in FIG. 12, in the system embodiment, the at least one operating device includes: an audio device 94 and/or a driving device 95;
in the present embodiment, the controller 91 further includes: a judgment module 915.
The judgment module 915 is configured to judge whether there is a need to call the audio device 94 and/or the driving device 95 when the operation corresponding to the user operation request is being performed by the operating device; and
the control module 912 is configured to control the power supply module 913 to supply power to the audio device 94 and/or the driving device 95 when the determining module 914 determines that there is the need to call the audio device 94 and/or the driving device 95, and control the power supply module 913 to stop supplying power to the audio device 94 and/or the driving device 95 when the determining module 914 determines that the corresponding operation has been accomplished by the audio device 94 and/or the driving device 95.

The intelligent lock system provided by the embodiment of the present application may be used to perform the methods in the embodiments shown in FIG. 2 to FIG. 8, the implementation principles and technical effects are similar, and details are not described herein again.

To sum up, compared with the existing door lock system with multiple unlocking modes, the intelligent lock system provided by the embodiments of the present application achieves the low power consumption of the entire intelligent lock system through cooperation of multiple devices. When peripheral devices are in a non-working state, the controller can stop supplying power to them, and the controller can be in the sleep mode when there is no pending task and can be automatically wake up and enter the working mode once being triggered by a peripheral signal. While ensuring the stability of the intelligent lock system, the power consumption is greatly reduced, the life of the intelligent lock system is extended, and the product competitiveness is improved.

It should be noted that, it is understandable that the division of each module of the above devices is only a division of logical functions, in an actual implementation, may be fully or partially integrated on a physical entity, and may also be physically separated. And these modules can all be implemented in a form of software called through processing elements; can also be all implemented in a form of hardware; and can also be that some modules can be implemented in the form of the processing elements calling the software, and some modules can be implemented in the form of hardware. For example, the determining module may be a separately established processing element, and it may also implemented by integrated in a certain chip of the above devices, in addition, it may also be stored in the memory of the above devices in a form of a program code, and a certain processing element of the above devices may call and perform functions of the above determining module. The implementations of other modules are similar. In addition, all or part of these modules can be integrated together, or can be implemented independently. The processing element described herein may be an integrated circuit with processing capability of signals. In an implementation process, each step of the above methods or each of the above modules may be accomplished through an integrated logic circuit of hardware in the processing element or an instruction in the form of software.

For example, the above modules may be one or more integrated circuits configured to implement the above methods, for example: one or more application specific integrated circuits (application specific integrated circuit, ASIC), or one or more microprocessors (digital signal processor, DSP), or, one or more field programmable gate arrays (field programmable gate array, FPGA) or the like. For another example, when one of the above modules is implemented in a form of the processing element scheduling a program code, the processing element may be a general-purpose processor, such as a central processing unit (central processing unit, CPU) or other processors that can call program codes. For another example, these modules can be integrated together and implemented in a form of a system-on-a-chip (system-on-a-chip, SOC).

The above embodiments may be implemented in whole or in part through software, hardware, firmware, or any combination thereof. When implemented using software, they may be implemented in whole or in part in a form of a computer program product. The computer program product includes one or more computer instructions. When the computer program instructions are loaded and executed on a computer, the processes or functions according to the embodiments of the present application are all or partially generated. The computer may be a general-purpose computer, a dedicated computer, a computer network, or other programmable devices. The computer instructions may be stored in a computer-readable storage medium or transmitted from one computer-readable storage medium to another computer-readable storage medium, for example, the computer instructions may perform transmission from a website site, computer, server, or data center to another website site, computer, server, or data center by means of wired (such as coaxial cable, fiber optic, digital subscriber line (DSL)) or wireless (such as infrared, wireless, microwave, and the like). The computer-readable storage medium may be any available medium that can be accessed by a computer or a data storage device such as a server, a data center, and the like that includes one or more available medium integration. The available medium may be a magnetic medium (for example, a floppy disk, a hard disk, a magnetic tape), an optical medium (for example, a DVD), or a semiconductor medium (for example, a solid state disk (solid state disk, SSD)), or the like.

The present application also provides a storage medium, the storage medium stores instructions, and when the instructions are run on a computer, the computer is caused to execute the foregoing power supply control methods of the intelligent lock. The content and effect thereof can refer to the method embodiment parts, which will not be described again.

In the present application, "at least one" refers to one or more, and "multiple" refers to two or more. "and/or", describes an association relationship of associated objects, and represents that there can be three kinds of relationships, for example, A and/or B can represent: the case where A exists alone, A and B exist simultaneously, and B exists alone, where A, B can be singular or plural. The character "/" generally represents that associated objects front and back have an "or" relationship; in a formula, the character "/" represents that the associated objects front and back has a "divide" relationship. "the following at least one item (one)" or similar expressions thereto refers to any combination of these items, including any combination of single item (single) or plural items (plural). For example, at least one item (one) of a, b, or c, can be expressed as: a, b, c, a-b, a-c, b-c, or a-b-c, where a, b, and c can be single, and may also be multiple.

It can be understood that various numerical numbers involved in the embodiments of the present application are only for the convenience of description and are not used to limit the scope of the embodiments of the present application.

It can be understood that, in the embodiments of the present application, the order of the sequence numbers of the above processes does not mean an order of an execution sequence. and the execution sequence of each process should be determined by its function and internal logic, and should not constitute any limitation to the implementation of the embodiments of the present application.

Finally, it should be noted that the above embodiments are merely intended for describing, rather than limiting, the technical solutions of the present application; although the present application has been described in detail with reference to the foregoing various embodiments, those skilled in the art will understand that they may still make modifications to the technical solutions described in the foregoing various embodiments, or make equivalent substitutions to some or all of the technical features therein; and these modifications or substitutions do not make the essence of the corresponding technical solutions deviate from the scope of the technical solutions in the various embodiments of the present application.

## Claims

1. A power supply control method of an intelligent lock, applied to an intelligent lock system, the intelligent lock system comprises: a controller and at least one operating device, wherein the method comprises:
acquiring, by the controller, a wake-up request, wherein the wake-up request is used to indicate that the controller is in a working mode;
supplying, by the controller, power to an operating device corresponding to the wake-up request when the controller is in the working mode; and
stopping, by the controller, supplying power to the operating device when determining that a processing corresponding to an acquired user operation request has been accomplished by the operating device in a power-on state.

2. The method according to claim 1, wherein after the controller stops supplying power to the operating device, the method further comprises:
entering, by the controller, a sleep mode from the working mode.

3. The method according to claim 2, wherein the method further comprises:
entering, by the controller, the working mode from the sleep mode under a control of a self-possessed timing module when the controller is in the sleep mode;
detecting, by the controller, whether there is a pending task in the intelligent lock system; and
entering, by the controller, the sleep mode from the working mode when determining that there is no pending task.

4. The method according to any one of claims 1 to 3, wherein the at least one operating device comprises: a fingerprint processing device;
the acquiring, by the controller, a wake-up request, comprises:
acquiring, by the controller, the wake-up request sent by the fingerprint processing device through a sensing module;
correspondingly, before the controller acquires the wake-up request, the method further comprises:
generating, by the fingerprint processing device, the wake-up request based on the user operation request detected by the sensing module; and
sending, by the fingerprint processing device, the wake-up request to the controller through the sensing module.

5. The method according to claim 4, wherein after the controller supplies power to the operating device corresponding to the wake-up request, the method further comprises:
performing, by the fingerprint processing device in the power-on state, the processing corresponding to the user operation request, to obtain a processing result;
sending, by the fingerprint processing device, the processing result to the controller; and
determining, by the controller when receiving the processing result, that the processing corresponding to the user operation request has been accomplished by the fingerprint processing device.

6. The method according to any one of claims 1 to 3, wherein the at least one operating device comprises: a narrowband internet of things NB-IOT device;
the acquiring, by the controller, a wake-up request, comprises:
utilizing, by the controller, a latch to acquire the wake-up request sent by the NB-IOT device through a communication module, wherein the latch is connected with the communication module of the NB-IOT device;
correspondingly, before the controller acquires the wake-up request, the method further comprises:
generating, by the NB-IOT device, the wake-up request based on the user operation request acquired by the communication module; and
sending, by the NB-IOT device, the wake-up request to the controller through the communication module.

7. The method according to claim 6, wherein after the controller supplies power to the operating device corresponding to the wake-up request, the method further comprises:
performing, by the NB-IOT device in a power-on state, the processing corresponding to the user operation request, to obtain a processing result;
sending, by the NB-IOT device, the processing result to the controller; and
determining, by the controller when receiving the processing result, that the processing corresponding to the user operation request has been accomplished by the NB-IOT device.

8. The method according to any one of claims 1 to 3, wherein the controller is integrated with a Bluetooth module; and the controller is in the working mode when the Bluetooth module is in a working state, and the controller is in a sleep mode when the Bluetooth module is in a non-working state.

9. The method according to claim 8, wherein the controller is further integrated with a near field communication NFC module; and an NFC query operation is performed by the controller through the NFC module when the Bluetooth module is in the working state.

10. The method according to any one of claims 1 to 9, wherein the at least one operating device comprises: an audio device and/or a driving device;
the method further comprises:
judging, by the controller, whether there is a need to call the audio device and/or the driving device when the operation corresponding to the user operation request is being performed by the operating device;
supplying, by the controller, power to the audio device and/or the driving device when determining that there is the need to call the audio device and/or the driving device; and
stopping, by the controller, supplying power to the audio device and/or the driving device when determining that the corresponding operation has been accomplished by the audio device and/or the driving device.

11. An intelligent lock system, comprising a controller and at least one operating device, wherein the controller comprises: an acquiring module, a control module, a power supply module and a determining module;
the acquiring module is configured to acquire a wake-up request, wherein the wake-up request is used to indicate that the controller is in a working mode;
the control module is configured to control the power supply module to supply power to an operating device corresponding to the wake-up request when the controller is in the working mode, and control the power supply module to stop supplying power to the operating device when the determining module determines that a processing corresponding to an acquired user operation request has been accomplished by the operating device in a power-on state.

12. The system according to claim 11, wherein the control module is further configured to control, after stopping supplying power to the operating device, the controller to enter a sleep mode from the working mode.

13. The system according to claim 12, wherein the control module is further configured to control the controller to enter the working mode from the sleep mode under a control of a timing module that the controller has, when the controller is in the sleep mode;
the determining module is further configured to detect whether there is a pending task in the intelligent lock system; and
the control module is further configured to control the controller to enter the sleep mode from the working mode when the determining module determines that there is no pending task in the intelligent lock system.

14. The system according to any one of claims 11 to 13, wherein the at least one operating device comprises a fingerprint processing device; the fingerprint processing device comprises: a sensing module, a fingerprint processing module, and a transceiver module;
the acquiring module is specifically configured to acquire the wake-up request sent by the fingerprint processing device through the sensing module;
correspondingly, the fingerprint processing module is configured to generate the wake-up request based on the user operation request detected by the sensing module before the acquiring module acquires the wake-up request; and
the transceiver module is configured to send the wake-up request to the controller through the sensing module.

15. The system according to claim 14, wherein the fingerprint processing module is further configured to perform the processing corresponding to the user operation request when the fingerprint processing device is in the power-on state, to obtain a processing result;
the transceiver module is further configured to send the processing result obtained by the fingerprint processing module to the controller; and
the determining module is further configured to determine, when receiving the processing result sent by the transceiver module, that the processing corresponding to the user operation request has been accomplished by the fingerprint processing device.

16. The system according to any one of claims 11 to 13, wherein the at least one operating device comprises a narrowband internet of things NB-IOT device; the NB-IOT device comprises: a communication module, and an NB processing module;
the acquiring module is specifically configured to utilize a latch to acquire the wake-up request sent by the NB-IOT device through the communication module, wherein the latch is connected with the communication module of the NB-IOT device;
the NB processing module is configured to generate the wake-up request based on the user operation request acquired by the communication module before the acquiring module acquires the wake-up request; and
the communication module is further configured to send the wake-up request to the controller.

17. The system according to claim 16, wherein the NB processing module is further configured to perform the processing corresponding to the user operation request when the NB-IOT device is in a power-on state, to obtain a processing result;
the communication module is further configured to send the processing result obtained by the NB processing module to the controller; and
the determining module is further configured to determine, when receiving the processing result sent by the communication module, that the processing corresponding to the user operation request has been accomplished by the NB-IOT device.

18. The system according to any one of claims 11 to 13, wherein the controller is integrated with a Bluetooth module; and the controller is in the working mode when the Bluetooth module is in a working state, and the controller is in a sleep mode when the Bluetooth module is in a non-working state.

19. The system according to claim 18, wherein the controller is further integrated with a near field communication NFC module; and
the control module is further configured to control the NFC module to perform an NFC query operation when the Bluetooth module is in the working state.

20. The system according to any one of claims 11 to 19, wherein the at least one operating device comprises: an audio device and/or a driving device;
the controller further comprises a judgment module;
the judgment module is configured to judge whether there is a need to call the audio device and/or the driving device when the operation corresponding to the user operation request is being performed by the operating device; and
the control module is configured to control the power supply module to supply power to the audio device and/or the driving device when the determining module determines that there is the need to call the audio device and/or the driving device, and control the power supply module to stop supplying power to the audio device and/or the driving device when the determining module determines that the corresponding operation has been accomplished by the audio device and/or the driving device.

21. A storage medium, wherein the storage medium is stored with instructions, and when the instructions are run on a computer, the computer is caused to execute the power supply control method of the intelligent lock according to any one of claims 1 to 10.
